## Europäisches Patentamt
## European Patent Office
## Office européen des brevets

(19)

(11) Publication number: **0 116 405**
**A1**

(12) # EUROPEAN PATENT APPLICATION

(21) Application number: **84300123.1**

(22) Date of filing: **10.01.84**

(51) Int. Cl.³: **C 21 C 5/52**
**F 27 B 14/06, H 05 B 6/20**

(30) Priority: **11.01.83 US 457123**

(43) Date of publication of application:
**22.08.84 Bulletin 84/34**

(84) Designated Contracting States:
**DE FR GB IT SE**

(71) Applicant: **CO-STEEL INTERNATIONAL LIMITED**
**1601 Hopkins Street**
**Whitby Ontario, L1N 2C3(CA)**

(72) Inventor: **Forward, Gordon Edward**
**1203 Brock Spring Rd.**
**Duncanville Texas 75116(US)**

(72) Inventor: **Schmelzle, Lloyd Melvin**
**214 Mantlebrook Drive**
**Desoto Texas 75115(US)**

(72) Inventor: **Lincoln, Ronald Edward**
**c/o Chaparral Steel Company 300 Ward Road**
**Midlothian, Texas 76065(US)**

(74) Representative: **Coxon, Philip et al,**
**Eric Potter & Clarkson 14 Oxford Street**
**Nottingham NG1 5BP(GB)**

(54) Steel production using channel induction furnace.

(57) A method and apparatus for using a channel induction furnace (10) in casting steel. In the method, material is charged directly into the furnace (10) to replenish a bath of molten steel therein. Preferably the material is steel scrap and the scrap is charged into the furnace (10) through a hopper located above the furnace which may also act to vent furnace gases thereby drying and preheating the scrap. Molten steel may be poured directly into a tundish (80) associated with a steel casting apparatus (12). Two inductors may be mounted on the furnace (10) and individually detachable to allow continuous operation of the furnace while one or the other inductor is being replaced. Two channel induction furnaces may be used as melting furnaces and a third used as a holding furnace fed from the melting furnaces. Preferably horizontal casting apparatus is used together with reheating and continuous rolling.

./...

FIG. 1

## STEEL PRODUCTION USING CHANNEL INDUCTION FURNACE

This invention relates to the production of steel using a channel induction furnace.

In steel production using steel scrap or other ferrous material, the scrap is melted and refined in an electric arc, open hearth or basic oxygen furnace and the molten metal is poured into a ladle which is used to charge a tundish for casting.

The electric arc furnace uses electrodes which are fed continuously through the roof of the furnace as their lower ends are consumed by arcing of the electrical charge to the scrap in the hearth. Each time the molten steel is poured off, the furnace must be recharged by removing the roof and dropping in a new charge of scrap.

Consequently the production of steel using an electric arc furnace has certain disadvantages, including the high cost of electrodes, a high level of noise and air pollution, the need for heavy crane equipment and associated structural facilities to move the ladle from the furnace to the tundish, and the non-uniformity of the composition of the steel from one melt to the next.

An apparatus known as a channel induction furnace is presently used to melt or modify the composition or iron and non-ferrous metals used for commercial castings. In certain instances such a furnace has been used to receive a steel melt and hold it for a brief period to adjust its chemical composition and temperature, after which the melt is transferred to a ladle for pouring into a tundish. In a channel inductor furnace, heat is induced by the use of an inductor coil located outside the furnace shell which heats a small proportion of the liquid metal in the furnace. By electromagnetic propulsion and convection currents, the liquid metal moves continuously through the main body of the furnace. Channel induction furnaces are manufactured, for example, by Ajax Magnethermic Corporation of Warren, Ohio, U.S.A.

It is a characteristic of a channel induction furnace that variations in the composition of the melt are minor and highly controllable, resulting in a more uniform product. Another characteristic of such a furnace is the low level of noise accompanying its operation. Again, the capital costs and operating costs of such a furnace are relatively low and less energy is consumed per ton of manufactured product, compared with other methods of iron manufacture.

To profit from these characteristics it is an object of the present invention to provide a method and apparatus for producing steel using a channel induction furnace. Using such a method and apparatus a consistently uniform cast steel product is obtainable which is especially advantageous for continuous or semi-continuous casting. Furthermore the production of a wide range of alloys is obtainable because of the ability to control the composition of the metal. Also the environmental problems of dust and noise pollution are minimal. Relatively low capital costs, operating costs and electrical energy savings are also achieved, including the elimination of ladle handling equipment.

In the use of an electric arc furnace to produce steel it is often necessary to prepare the scrap charge to eliminate large pieces which would interfere with the proper arcing pattern of the electrodes. A further advantage of using a channel induction furnace to produce steel is that such precharging preparation of the scrap is generally not required.

Another disadvantage of an electric arc furnace is the amount of heat loss during its operation. It is a further object of the invention to provide a channel induction furnace for use in producing steel and having a roof structure enabling a scrap charge to be preheated by the furnace gases and dropped directly into the furnace, and the method attendant therewith.

One problem in operating a channel induction furnace is the necessity of shutting down the furnace to repair the inductor. This problem is aggravated in steelmaking where the refractory lining must be replaced frequently. It is therefore still another object of the invention to provide a channel induction furnace for the production of steel, in which at least two replaceable inductors are associated with the furnace for alternate use, enabling the worn out refractory lining of each inductor to be replaced without it being necessary to shut down the furnace.

Using a channel induction furnace for steelmaking, it is possible to construct a small mill which will produce, ecomonically, steel products in the form of rebar, angles, merchant rounds, flats and the like at a rate as low as 20,000 tons per year or less. Since horizontal continuous casting apparatus may be used, the capital cost of plant construction is further reduced. It is therefore an important object of the invention to provide a method and apparatus for making, casting and rolling steel using respectively a channel induction furnace, a horizontal casting machine and a rolling mill, and eliminating the use of a ladle between the furnace and the tundish of the casting machine. Various advantages accruing from the use of such a mill, some of which have already been outlined above, are as follows:

A.  Smaller plant size;

B.  Relatively low capital cost for equipment;

C. Reduced operational and maintenance costs;

D. Elimination of the use of costly electrodes;

E. By elimination of ladle, no stirring required and also a higher yield from scrap is achieved;

F. Improved environmental conditions by reduction in noise and air pollution;

G. Lower costs for rolling mill since horizontal casting can produce smaller sections, which require less reduction, and which enable fewer stands to be used and more closely spaced;

H. Better production of high alloy steels by use of a horizontal casting machine for maintaining satisfactory quality. In the case of steel containing a significant amount of aluminium, say .015%, the orifice leading from the tundish to the mould in a horizontal casting machine is larger and less susceptible to clogging than a vertical casting machine.

I. Continuous casting with a relatively unchanging composition of the steel, provides improvements in yield.

J. Production of steel using normally prepared scrap rather than specially sized scrap.

K. Lower overall manpower requirements.

L. The induction furnace may be split into sections for easy maintenance and/or replacement of refractories.

An important advantage of the invention is to provide a continuous melt of consistent composition. One manner of achieving this advantage is by the use of three or more channel induction furnaces, one being a holding furnace to which alloys may be added, and the others being melting furnaces which feed the holding furnace.

In its broadest aspect the invention consists of a method of producing steel including the step of charging material in a channel induction furnace to replenish a bath of molten steel therein. Molten steel may be poured directly from the channel induction furnace into a tundish associated with steel casting apparatus, preferably a horizontal casting device. In another aspect the invention resides, in apparatus for the production of steel, in a channel induction furnace, means to charge material into the furnace to replenish a bath of molten steel therein, and a tundish associated with a steel casting apparatus and positioned directly to receive molten metal poured from the furnace.

The invention also resides in a method and apparatus for producing steel in which a channel induction furnace is used, in which the scrap is preheated by charging it into a hopper located above the furnace, preferably venting the hot furnace gases upwardly through the hopper, and then discharging the scrap from the hopper into the furnace.

The invention also consists of a channel induction furnace, adapted for use in the production of steel, in which two inductors are provided for continuous operation of the furnace while replacing an inductor on line.

An example embodiment of the invention is shown in the accompanying drawings in which:

Figure 1 is a schematic flow diagram showing the production of steel using a channel induction furnace;

Figure 2 is a side view in elevation, partly broken away, showing the channel induction furnace of Figure 1;

Figure 3 is a plan view of the furnace of Figure 2;

Figure 4 is a fragmentary, exploded perspective view of one of the inductors of the furnace of Figure 2; and

Figure 5 is a plan view of an alternate embodiment of the invention using a holding furnace.

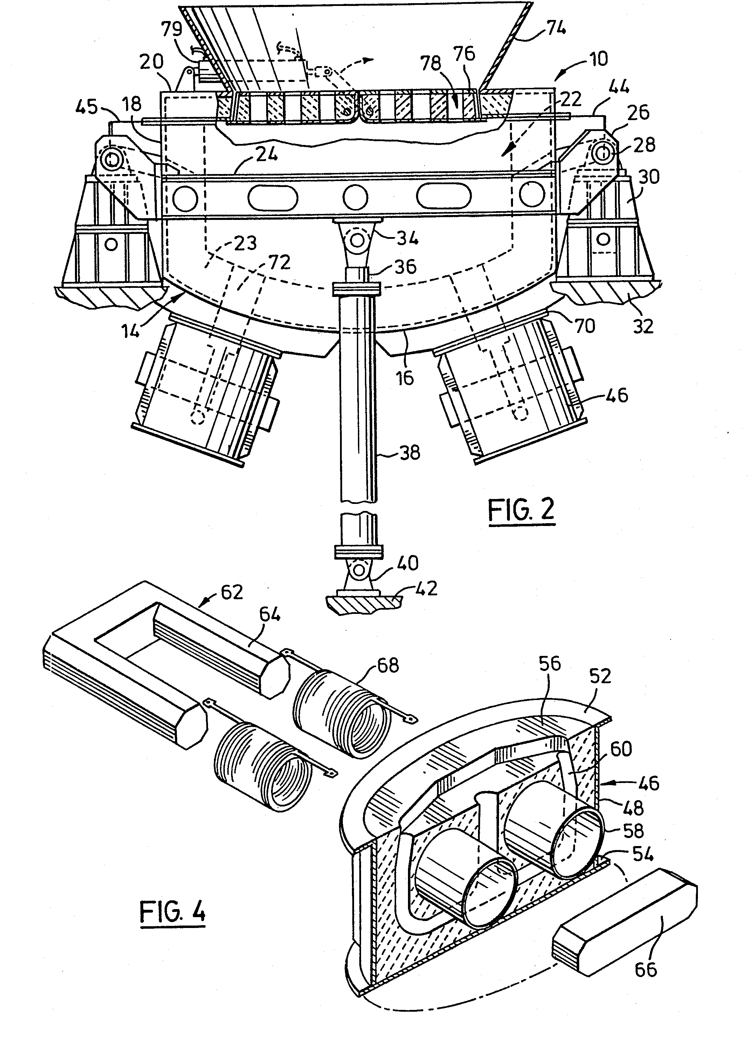

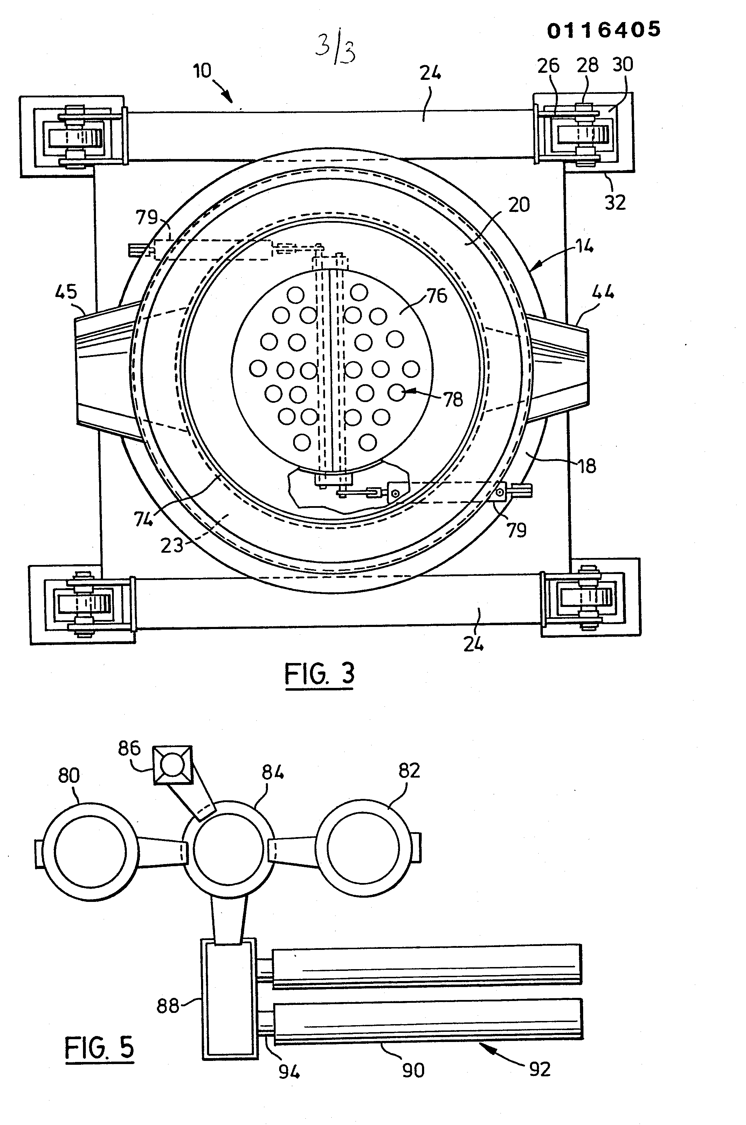

In the example embodiment shown in the drawings a channel induction furnace 10 is used in the production of steel using a continuous or semi-continuous horizontal casting apparatus 12. As seen in Figures 2 and 3, furnace 10 comprises a hearth 14 with a concave bottom 16, a circular sidewall 18 and a roof 20, all enclosing a chamber 22. Roof 20 is preferably a hydraulically operated swing-back type. Bottom 16, sidewall 18 and roof 20 are each lined on their inner surfaces with a refractory lining 23. Sidewall 18 carries a pair of parallel beams 24, one fixed on each side of sidewall 18 and each end 26 of each beam 24 is attached by a removable pivot pin 28 to a trunnion 30 mounted on a pedestal 32. A boss 34 is fixed to each beam 24 midway between each end 26 and the piston 36 of a hydraulic cylinder 38 is pivotally attached at its free end to boss 34, the end of cylinder 38 remote from piston 36 being pivotally attached to a boss 40 fixed to a bed 42 on which pedestal 32 also rest. A molten metal pouring spout 44 and a diametrically opposed slag chute 45 open from chamber 22 in the upper portion of sidewall 18 between arms 24.

Bottom 16 of hearth 14 carries externally a pair of channel inductors 46 symmetrically disposed about the vertical axis of the hearth in the vertical plane through spout 44 and chute 45. Each inductor 46 is constructed as shown in Figure 3 of the drawings and consists of an outer elliptical shell 48 having an outwardly extending upper flange 52 and a bottom plate 54. Shell 48 encompasses a block 56 of refractory material. A pair of parallel annular cylinders 58 are imbedded transversely in block 56 and open at each end externally of shell 48. A W-shaped channel 60 in block 56 circumscribes both cylinders 58 and opens upwardly in the region of the plane of upper flange 52. A V-shaped iron transformer core 62 has a pair of arms 64 insertable through cylinders 58 and carries a detachable end cap 66 to complete core 62. Each arm 64 of core 62 carries primary winding coils 68. Each inductor 46 is attached to bottom 16 of furnace 10 by upper flange 52 removably bolted to a corresponding flange 70 located on the outer surface of the furnace bottom. A passage 72 through bottom 16 and refractory lining 23 communicates with channel 60 in inductor 46.

Roof 20 of furnace 10 is supported on sidewall 18 and is removable. A hopper 74 projects upwardly from roof 20 and that portion of the roof forming the floor of the hopper is constructed as a butterfly gate 76 pivotably mounted on crossbars 77 and having a plurality of vent passages 78 leading from chamber 22 of hearth 14. Gate 76 is opened and closed by hydraulic cylinders 79 acting on crossbars 77.

To initiate the operation of furnace 10 in the example embodiment, it is first necessary to charge a minimum amount of molten steel into hearth 14 in order to fill channels 60 of inductors 46 and to provide a pool in the lower portion of chamber 22 to receive scrap. Inductors 46 are operated at all times to maintain the metal in the hearth in liquid form.

Scrap steel or other ferrous raw material is charged into hopper 74 of furnace 10, preferably by a charging bucket which has been filled by a crane magnet. As the scrap charge sits in hopper 74 it is preheated by hot gases from chamber 22 passing upwardly through vents 78 in gate 76. To drop the scrap charge into the molten bath in chamber 22, gate 76 is opened by hydraulic cylinders 79.

In the operation of each inductor 46, the molten metal in channel 60 forms the equivalent of a secondary transformer circuit about core 62 and primary coil 68. By the application of sufficient current to primary coil 68, heat is generated in channel 60 and electromagnetic forces circulate molten metal through the channel and up into chamber 22. In this manner uniform, accurate temperature control and homogeneous composition throughout the molten metal bath are obtained.

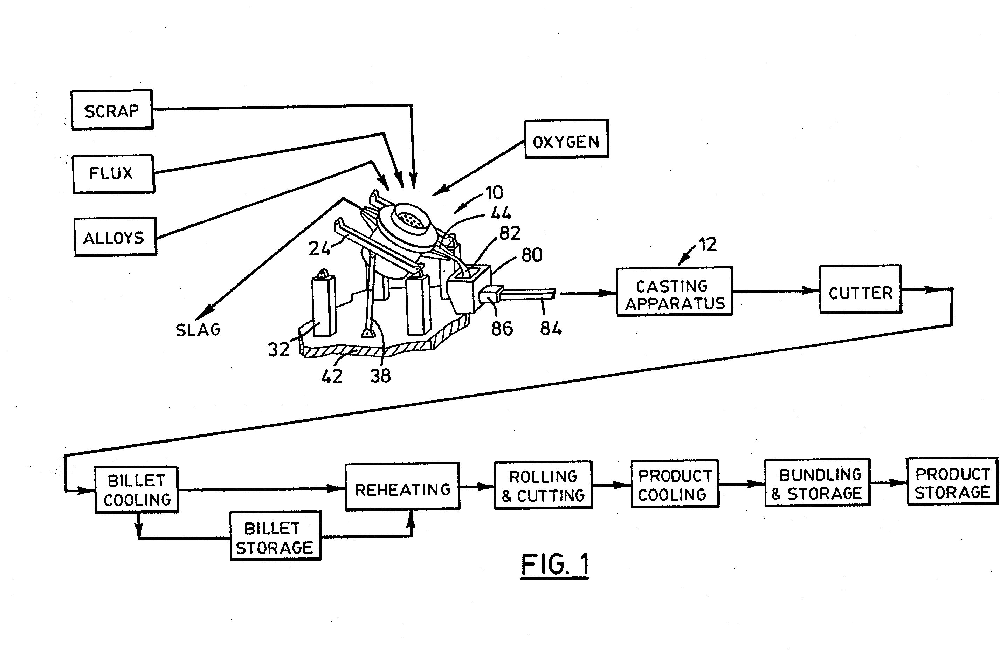

As seen in Figure 1, furnace 10 is one unit of a mill for the production of steel products and is located in line with casting apparatus 12, the tundish 80 of the casting apparatus being positioned beneath pouring spout 44 of the furnace. To pour molten metal from hearth 14 of furnace 10 into tundish 80 of casting apparatus 12, pins 28 are removed from ends 26 of beams 24 adjacent slag chute 45 and the furnace is tilted by means of hydraulic cylinders 38. As molten metal 82 is received in tundish 80 it is discharged as a stream 84 from outlet 86 of the tundish into casting apparatus 12 in known manner. In this connection it should be noted that hearth 14 must contain a suitable amount of molten metal and the tilt of the furnace must be such that passages 72 are not exposed during the pouring operation.

To remove slag from the bath in hearth 14, furnace 10 is tilted by hydraulic cylinder 38 about pins 28 adjacent slag chute 45 after removing pins 38 adjacent spout 44.

Casting apparatus 12 may be continuous or semi-continuous in operation and a vertical continuous casting machine could be used instead of a horizontal machine. When the cast billet emerges from casting apparatus 12 it is cut into suitable lengths by a cutter 88. The billets may be either stored or reheated immediately for rolling and cutting into the final product which is cooled, bundled and stacked, and stored.

In one test, a furace 10 was used having a diameter of 7 feet and a nominal capacity of 35 tons, with melting power supplied by a single inductor rated at 1500 KW. Refractory lining 23 of hearth 14 consisted of (1) a sheet 0.3" thick of FIBERFAX (a trade mark identifying a refractory fibre paper) forming an outer insulating blanket lying against the shell of the hearth, (2) an intermediate layer 3.0" thick of 70% alumina firebrick, and (3) a poured inner working lining 10.3" thick of KAISER 98 (a trade mark identifying a high magnesia castable refractory). The measured "K" values and the average temperatures through the lining of sidewall 18 were as follows:

|  | thickness | "K" value | temperature drop |
|---|---|---|---|
| inner layer | 10.3" | 23.0 | $2900^{\circ} - 1932^{\circ}F$ |
| intermediate layer | 3.0" | 13.7 | $1932^{\circ} - 1458^{\circ}F$ |
| outer layer | 0.3" | 0.6 | $1458^{\circ} - 554^{\circ}F$ |

The refractory material used to pour block 56 of inductor 46 was KR 98 Permanente which is a trade mark identifying a material the same as KAISER 98 but with a larger and more irregular grain size. The inductor components were water cooled.

By first charging the steel scrap into hopper 74, as mentioned above, the heat of gases emanating from hearth 14 is utilized to preheat the scrap, which improves the thermal efficiency of the process and apparatus. This also eliminates the need to remove roof 20, which makes the charging step more efficient and at the same time prevents the wholesale discharge of the furnace gases. The scrap perheat also acts to dry the scrap, eliminating the need for a separate scrap dryer. It will be appreciated that preheating is not essential to the invention and the furnace may be charged directly, continously if desired, without preheating the charge. In this connection it may be desired to feed cold scrap or other iron-bearing materials to the furance, after the melt has been brought up to the required temperature, at a rate which will be directly related to the amount of electrical power used to operate the inductor, thus balancing the operating temperature at that power consumption rate.

Lime, dolomite or other fluxing materials may be added to the melt in furnace 10 as required, either in bulk form or blown into the melt in powder form by means of a lance. In order to make adjustments to the composiiton of the melt or to increase the rate of temperature rise, oxygen may be blown onto, or injected into, the bath by means of a lance in known manner. Such oxygen treatment acts to decrease the concentration of carbon, phosphorous, silicon, manganese and sulphur to required levels either by direct oxidation or my means of increased contact between the slag and the metal caused by turbulence induced by the gas stream. Similar effects may be obtained by the addition of iron oxide in the form of iron ore or mill scale, either in bulk form or blown into the melt as powder.

When using furnace 10 for semi-continuous casting furnace 10 may be oeprated at a relatively low temperature, say 2850 - 2900°F, the bath being brought up to a temperature suitable for casting, say an additional 100°F, only when required for pouring. This procedure prolongs the life of the refractory lining, especially in the channel.

In the alternate embodiment of the invention shown in Figure 5 of the drawings a pair of melting furnaces 80 and 82, each being a channel induction furnace, are used to melt the steel scrap or other ferrous material and the molten steel is poured into a third channel induction furnace 84 which is a holding furnace. If desired suitable alloying materials may be added from a hopper 86 into holding furnace 84 instead of being added to melting furnaces 80 and 82. From holding furnace 84 the molten steel is poured into a tundish 88 connected with spray boxes 90 of a horizontal casting machine 92 by moulds 94.

The embodiment of Figure 5 has the advantage that one of the melting furnaces 80 or 82 may be withdrawn for relining without interrupting the continuous replenishment of tundish 88 from holding furnace 84. Also, the addition of alloying materials to holding furance 84 more easily provides uniformity to the composition of the molten steel.

The present invention is particularly suitable for horizontal casting in which the tundish is close-coupled to the mould without exposing the steel to the atmosphere on leaving the tundish. Also, the orifice from the tundish to the mould in a horizontal casting machine is larger than that of a vertical casting machine and therefore less liable to be plugged by deposits such as alumina. On leaving the horizontal casting machine the cast steel may be transferred in a continuous manner into a reheating furnace for a brief reheating period without prior cooling to the ambient temperature or it may be cut and piled temporarily for later reheating. From the reheating furnace the steel would proceed directly to a rolling mill which can be a small scale mill with closely coupled stands. The

12-

small scale of the rolling mill is related to the small cross-section of the cast steel which is achieved by using a horizontal casting machine instead of a conventional casting machine, the latter requiring greater reduction ratios because the cast section is larger.

The stand sequence for rolling the small size cast on a horizontal casting machine can be arranged in a U-shaped pattern to permit the final stands, cooling beds or coilers to be parallel to, and adjacent, the mill entry, thus providing ecomonies in building size.

It will be noted that the term "billets" used in the specification and claims includes blooms, shapes, rounds and the like.

-13-

## CLAIMS

1. A method of producing steel, characterised in that it includes the step of charging material into a channel induction furnace to replenish a bath of molten steel therein.

2. A method as claimed in Claim 1 including the steps of pouring molten steel from the furnace directly into a tundish associated with a steel casting apparatus and casting steel therefrom.

3. A method as claimed in Claim 1 or 2 in which said material additionally comprises at least one alloy.

4. A method as claimed in Claim 3 including the step of charging the steel scrap into a hopper located above the furnace, and discharging the scrap from the hopper into the furnace.

5. A method as claimed in Claim 4 including the step of venting hot gases from the furnace upwardly through the hopper, and thereafter discharging the scrap from the hopper into the furnace.

6. A method of producing steel, characterised in that it includes the steps of charging material into a first channel induction furnace and into a second channel induction furnace to replenish a bath of molten steel therein, pouring molten steel directly into a third channel induction furnace acting as a holding furance, and pouring molten steel from the third channel induction furnace directly into a tundish associated with steel casting apparatus and casting steel therefrom.

7. A method as claimed in Claim 6 including the step of introducing at least one alloy into the third channel induction furnace.

8. A method as claimed in any of the preceding claims in which the temperature of the bath is maintained above the melting temperature but below the pouring temperature and is increased to the pouring temperature immediately prior to each casting operation.

9. Apparatus for the production of steel, characterised in that it includes a channel induction furnace, means to charge material into the furnace to replenish a bath of molten steel therein, and a tundish associated with a steel casting apparatus and positioned to receive directly molten metal poured from the furnace.

10. Apparatus, for use in the production of steel, characterised in that it comprises a channel induction furnace having two inductors mounted thereon, each of said inductors being individually detachable from the furnace during the continuous operation thereof.

11. Apparatus for the production of steel, characterised in that it comprises a channel induction furnace, means to charge material directly into the furnace to replenish a bath of molten steel therein, horizontal steel casting apparatus having a tundish positioned to receive directly molten metal poured from the furnace, and means to handle the steel issuing from the casting apparatus.

SCRAP

FLUX

ALLOYS

OXYGEN

10

44
82
80

24

SLAG

32

42    38

86    84

12

CASTING
APPARATUS

CUTTER

BILLET
COOLING

BILLET
STORAGE

REHEATING

ROLLING
& CUTTING

PRODUCT
COOLING

BUNDLING
& STORAGE

PRODUCT
STORAGE

FIG. 1

0116405

FIG. 2

FIG. 4

0116405

FIG. 3

FIG. 5

European Patent Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | DE-A-1 758 451 (SCHENCK et al.)<br><br>* Claims 1,2,15,17; figure 2; page 13, paragraph 2 - page 15, paragraph 1 * | 1,3,4,5 | C 21 C 5/52<br>F 27 B 14/06<br>H 05 B 6/20 |
| | --- | | |
| Y | DE-A-2 406 480 (ALLMÄNNA SVENSKA)<br>* Figures; claims * | 1,6 | |
| | --- | | |
| Y | DE-A-2 121 564 (ROSSAK)<br>* Claims; figure 1; page 1, paragraphs 1-3 * | 1-6 | |
| | --- | | |
| A | DE-A-1 954 763 (ADAMEC et al.) | | |
| | --- | | TECHNICAL FIELDS SEARCHED (Int. Cl. 3) |
| A | DE-A-1 945 141 (WIENER SCHWACHSTROMWERKE) | | |
| | ----- | | C 21 C<br>F 27 B<br>H 05 B |

The present search report has been drawn up for all claims

| Place of search | Date of completion of the search | Examiner |
|---|---|---|
| THE HAGUE | 10-04-1984 | OBERWALLENEY R.P.L.I |